# EUROPEAN PATENT APPLICATION

(11) **EP 3 617 261 A1**
(43) Date of publication of application: **04.03.2020**
(21) Application number: 18791687.9
(22) Date of filing: 27.03.2018
(51) Int. Cl.: C08L 9/00, C08K 3/04, C08L 7/00, C08L 91/00, C09K 3/00, F16F 1/36, F16F 15/08

(54) **RUBBER COMPOSITION FOR ANTI-VIBRATION RUBBER AND ANTI-VIBRATION RUBBER FOR VEHICLE**

(30) Priority: 28.04.2017 JP 2017090503
(71) Applicant: Bridgestone Corporation, Tokyo 104-8340 (JP)
(72) Inventor: YATAGAI Mamoru, Tokyo 104-8340 (JP)
(74) Representative: Oxley, Robin John George
(86) International application number: PCT/JP2018/012573
(87) International publication number: WO 2018/198647

(57) **Abstract**

Provided is a rubber composition for anti-vibration rubber having excellent high-loss properties while maintaining a favorably low dynamic-to-static modulus ratio. The rubber composition for anti-vibration rubber includes a rubber component containing a diene rubber, more than 0 parts by mass and 10 parts by mass or less of carbon black with respect to 100 parts by mass of the rubber component, and 50 parts by mass to 70 parts by mass of oil with respect to 100 parts by mass of the rubber component.

## Description

### TECHNICAL FIELD

This disclosure relates to a rubber composition for anti-vibration rubber and an anti-vibration rubber for vehicle.

### BACKGROUND

Anti-vibration rubbers are materials disposed at parts which are the sources of vibrations or noises in automobiles and other vehicles, for the purpose of improving comfort of passengers. For example, in order to restrain the penetration of vibrations or noises into the interior, anti-vibration rubbers are used for torsional damper, engine mount, muffler hanger and other component members of an engine, which is a main source of vibrations and noises, to absorb vibrations when the engine is driven, and to restrain both the penetration of vibrations or noises into the interior of the vehicle and the diffusion of noises to the surrounding environment.

Such an anti-vibration rubber is required to have, as fundamental properties, strength properties for supporting heavy objects such as an engine and anti-vibration performance for absorbing and suppressing the vibrations thereof. In addition, when the anti-vibration rubber is used in a high-temperature environment such as an engine room, it is required to maintain the strength properties and, at the same time, keep a low dynamic-to-static modulus ratio and excellent anti-vibration performance. Therefore, various techniques have been developed to improve the strength properties and the anti-vibration performance.

In addition, from the viewpoint of improving the vibration damping performance of the anti-vibration rubber, it is desired to increase the hysteresis loss (tanδ) of the anti-vibration rubber. This is because, when the hysteresis loss (hereinafter, simply referred to as "loss") of the rubber increases, the transmission rate of the resonance vibration (shake) generated at a low frequency decreases.

That is, the anti-vibration rubber preferably has a high loss and a low dynamic-to-static modulus ratio. With conventional techniques, however, the dynamic-to-static modulus ratio increases as the loss increases, so it is difficult to obtain a combination of high loss and low dynamic-to-static modulus ratio.

In order to achieve both high loss and low dynamic-to-static modulus ratio in an anti-vibration rubber, JP H09-176387 A (PTL 1), for example, describes a technique for improving the loss properties of an anti-vibration rubber by using a specific high-loss polymer as a rubber component. According to the technique of PTL 1, it is possible to obtain a practical high-loss polymer that keeps the glass transition temperature of the rubber substantially the same as that of a conventional rubber. Using this high-loss polymer in the anti-vibration rubber can reduce the addition amount of carbon black. As a result, a high loss and a low dynamic-to-static modulus ratio can be realized.

### CITATION LIST

### Patent Literature

PTL 1: JP H09-176387 A

### SUMMARY

### (Technical Problem)

As described above, the technique of PTL 1 can achieve both high loss and low dynamic-to-static modulus ratio in an anti-vibration rubber. However, considering that the requirements imposed on low noise and low vibration are becoming stricter and stricter, it is desired to further improve the vibration damping performance and to develop an anti-vibration rubber having a higher loss (specifically, having a large tanδ around 15 Hz at room temperature).

It could thus be helpful to provide a rubber composition for anti-vibration rubber having excellent high-loss properties while maintaining a favorably low dynamic-to-static modulus ratio, and an anti-vibration rubber for vehicle that has excellent vibration damping performance and can improve the steering stability of a vehicle mounted with the anti-vibration rubber.

### (Solution to Problem)

As a result of extensive studies, we found that by limiting the content of carbon black in the rubber composition to a specific range and containing a specific amount of oil in the rubber composition, it is possible to maintain a favorably low dynamic-to-static modulus ratio and, at the same time, realize an extremely high loss not found in conventional rubber compositions for anti-vibration rubber.

That is, the presently disclosed rubber composition for anti-vibration rubber comprises a rubber component containing a diene rubber, more than 0 parts by mass and 10 parts by mass or less of carbon black with respect to 100 parts by mass of the rubber component, and 50 parts by mass to 70 parts by mass of oil with respect to 100 parts by mass of the rubber component.

With the above composition, it is possible to realize excellent high-loss properties while maintaining a favorably low dynamic-to-static modulus ratio.

For the presently disclosed rubber composition for anti-vibration rubber, the rubber component preferably contains at least a natural rubber and a butadiene rubber as the diene rubber, and a mass ratio of the natural rubber to the butadiene rubber (NR: BR) is preferably in a range of 60:40 to 10:90.

In this way, both low dynamic-to-static modulus ratio and high loss can be achieved at a higher level.

For the presently disclosed rubber composition for anti-vibration rubber, the carbon black is preferably contained in an amount of 2 parts by mass or less with respect to 100 parts by mass of the rubber component.

In this way, it is possible to realize better high-loss properties.

The presently disclosed rubber composition for anti-vibration rubber preferably further contains a crosslinking agent, and the crosslinking agent is preferably contained in an amount of more than 0 parts by mass and 3.5 parts by mass or less with respect to 100 parts by mass of the rubber component.

In this way, it is possible to realize better high-loss properties.

The presently disclosed anti-vibration rubber for vehicle uses a crosslinked rubber composition for anti-vibration rubber obtained by crosslinking the presently disclosed rubber composition for anti-vibration rubber, where the crosslinked rubber composition for anti-vibration rubber has a static spring constant (Ks) of 40 N/mm or less.

With the above configuration, it is possible to realize excellent vibration damping performance and vehicle steering stability.

### (Advantageous Effect)

According to the present disclosure, it is possible to provide a rubber composition for anti-vibration rubber having excellent high-loss properties while maintaining a favorably low dynamic-to-static modulus ratio, and an anti-vibration rubber for vehicle that has excellent vibration damping performance and can improve the steering stability of a vehicle mounted with the anti-vibration rubber.

### DETAILED DESCRIPTION

### <Rubber composition for anti-vibration rubber>

The following describes an embodiment of the presently disclosed rubber composition for anti-vibration rubber in detail.

The presently disclosed rubber composition for anti-vibration rubber comprises a rubber component containing a diene rubber, more than 0 parts by mass and 10 parts by mass or less of carbon black with respect to 100 parts by mass of the rubber component, and 50 parts by mass to 70 parts by mass of oil with respect to 100 parts by mass of the rubber component.

For the presently disclosed rubber composition for anti-vibration rubber, the content of carbon black in the rubber composition is limited to a small amount in consideration of the maintenance of a low dynamic-to-static modulus ratio, and the content of oil in the rubber composition is more than a normal amount. In this way, the rubber after crosslinking can be softened while maintaining a favorably low dynamic-to-static modulus ratio. As a result, it is possible to realize an extremely high loss not found conventional techniques.

On the other hand, most conventional rubber compositions for anti-vibration rubber achieve a low dynamic-to-static modulus ratio by maintaining the hardness of the rubber after crosslinking, so they do not have technical ideas of softening the rubber after crosslinking by reducing the content of carbon black and other reinforcing filling materials and increasing the content of oil as a softening agent, like the presently disclosed rubber composition for anti-vibration rubber. Therefore, the conventional techniques cannot use the same component composition as the presently disclosed rubber composition for anti-vibration rubber, and fail in obtaining high-loss properties comparable to that of the present disclosure.

### (Rubber component)

The rubber component contained in the presently disclosed rubber composition for anti-vibration rubber contains a diene rubber.

By containing a diene rubber as a rubber component, it is possible to maintain a favorably low dynamic-to-static modulus ratio.

The rubber component may be composed of 100 % diene rubber, or may contain rubbers other than the diene rubber within a range not to impair the effects of the present disclosure.

The content of the diene rubber in the rubber component is preferably 50 mass% or more, more preferably 80 mass% or more, and most preferably 100 mass%.

The type of the diene rubber is not particularly limited, and may be appropriately selected according to the performance required for the rubber composition for anti-vibration rubber. Specific examples include natural rubber (NR), isoprene rubber (IR), styrene butadiene rubber (SBR), styrene isoprene butadiene rubber (SIBR), ethylene propylene diene rubber (EPDM), chloroprene rubber (CR), acrylonitrile butadiene rubber (NBR), butyl rubber (IIR), and butadiene rubber (BR) (note that BR means polybutadiene which is a polymer of 1,3-butadiene, and does not include copolymers of butadiene and other polymers).

Among the above specific examples, the diene rubber preferably contains at least a natural rubber and a butadiene rubber, and more preferably consists only of a natural rubber and a butadiene rubber. In this way, both low dynamic-to-static modulus ratio and high loss can be achieved at a higher level.

In addition, from the viewpoint of suppressing the deterioration of moldability of the rubber composition while achieving both low dynamic-to-static modulus ratio and high loss at a higher level, the mass ratio of the natural rubber to the butadiene rubber (NR: BR) is preferably in the range of 60:40 to 10:90, more preferably in the range of 40:60 to 10:90, and particularly preferably in the range of 25:75 to 15:85. When the mass ratio of the butadiene rubber is 40 or more (the mass ratio of the natural rubber is 60 or less), it is possible to suppress the increase in hardness of the crosslinked rubber and realize a sufficiently high loss. When the mass ratio of the butadiene rubber is 90 or less (the mass ratio of the natural rubber is 10 or more), the moldability of the rubber composition is not deteriorated.

### (Carbon black)

The presently disclosed rubber composition for anti-vibration rubber contains carbon black in addition to the above-described rubber component.

By containing an appropriate amount of carbon black in the rubber composition for anti-vibration rubber, it is possible to maintain a favorably low dynamic-to-static modulus ratio.

The content of the carbon black is more than 0 parts by mass and 10 parts by mass or less with respect to 100 parts by mass of the rubber component. In this way, both low dynamic-to-static modulus ratio and high loss can be achieved at a high level. When the content of the carbon black is more than 10 parts by mass with respect to 100 parts by mass of the rubber component, the rubber after crosslinking cures and fails in obtaining a sufficiently high loss.

From the viewpoint of realizing better high-loss properties, the content of the carbon black is preferably less than 10 parts by mass, more preferably 8 parts by mass or less, still more preferably 5 parts by mass or less, and particularly preferably 2 parts by mass or less, with respect to 100 parts by mass of the rubber component. The lower limit of the content of the carbon black is not particularly limited. From the viewpoint of maintaining a favorably low dynamic-to-static modulus ratio, it is preferably 0.5 parts by mass or more, more preferably 1 part by mass or more, and particularly preferably 2 parts by mass or more, with respect to 100 parts by mass of the rubber component.

The type of the carbon black is not particularly limited, and may be any hard carbon or soft carbon obtained with an oil furnace method, for example. Among these, it is preferable to use FT, SRF, GPF, or FEF grade carbon black from the viewpoint of realizing better high-loss properties.

### (Oil)

The presently disclosed rubber composition for anti-vibration rubber further contains oil in addition to the above-described rubber component and carbon black.

By containing an appropriate amount of oil in the rubber composition for anti-vibration rubber, it is possible to realize excellent high-loss properties while maintaining a favorably low dynamic-to-static modulus ratio.

The content of the oil is 50 parts by mass to 70 parts by mass with respect to 100 parts by mass of the rubber component. In this way, both low dynamic-to-static modulus ratio and high loss can be achieved at a high level. When the content of the oil is less than 50 parts by mass with respect to 100 parts by mass of the rubber component, it is impossible to obtain a sufficiently high loss. On the other hand, when the content of the oil is more than 70 parts by mass with respect to 100 parts by mass of the rubber component, it is impossible to maintain a favorably low dynamic-to-static modulus ratio.

From the viewpoint of achieving both low dynamic-to-static modulus ratio and high loss at a higher level, the content of the oil is preferably 53 parts by mass to 65 parts by mass, and more preferably 55 parts by mass to 60 parts by mass, with respect to 100 parts by mass of the rubber component.

The type of the oil is not particularly limited as long as it improves the loss properties of the rubber composition for anti-vibration rubber. Examples thereof include process oil such as aromatic oil, naphthenic oil and paraffin oil, vegetable oil such as coconut oil, synthetic oil such as alkylbenzene oil, and castor oil.

Among the above-described oil, it is preferable to use at least one selected from the group consisting of aromatic oil, naphthenic oil and paraffin oil, and it is more preferable to use naphthenic oil. In this way, it is possible to realize better high-loss properties.

### (Crosslinking agent)

The presently disclosed rubber composition for anti-vibration rubber preferably further contains a crosslinking agent in addition to the above-described rubber component, carbon black and oil.

Containing an appropriate amount of crosslinking agent in the rubber composition for anti-vibration rubber enables the crosslinking of the rubber composition, and a favorably low dynamic-to-static modulus ratio can be maintained more reliably.

The amount of the crosslinking agent to be compounded is preferably more than 0 parts by mass and 3.5 parts by mass or less, more preferably 2.0 parts by mass or less, still more preferably 0.8 parts by mass or less, and particularly preferably 0.5 parts by mass or less, with respect to 100 parts by mass of the rubber component. When the amount of the crosslinking agent to be compounded exceeds 3.5 parts by mass with respect to 100 parts by mass of the rubber component, the hardness of the crosslinked rubber increases and the desired high-loss properties may not be obtained.

The type of the crosslinking agent is not particularly limited, and examples thereof include sulfur and a bismaleimide compound.

Examples of the bismaleimide compound include N,N'-o-phenylenebismaleimide, N,N'-m-phenylenebismaleimide, N,N'-p-phenylenebismaleimide, N,N'-(4,4'-diphenylmethane)bismaleimide, 2,2-bis-[4-(4-maleimidephenoxy)phenyl]propane, and bis(3-ethyl-5-methyl-4-maleimidephenyl)methane. The present disclosure may, for example, suitably use N,N'-m-phenylenebismaleimide and N,N'-(4,4'-diphenylmethane)bismaleimide.

### (Other components)

In addition to the above-described rubber component, carbon black, oil and crosslinking agent, the presently disclosed rubber composition for anti-vibration rubber may contain additives such as a filling material, a crosslinking accelerator, a crosslinking accelerating aid, an age resistor, an oxidation inhibitor, a filler, a foaming agent, a plasticizer, a lubricant, a tackifier and an ultraviolet absorbing agent, within a range not to impair the effects of the present disclosure.

The contents of the above-described other components are not particularly limited.

However, from the viewpoint of obtaining better high-loss properties, it is preferable that the content be small, and more preferable not to contain any other component.

The filling material is not particularly limited, and filling materials such as silica, white carbon, fine magnesium silicate, heavy calcium carbonate, magnesium carbonate, clay, and talc may be suitably used.

The crosslinking accelerator is not particularly limited, and any known crosslinking accelerator may be used. Examples thereof include thiazole vulcanization accelerators such as 2-mercaptobenzothiazole and dibenzothiazyl disulfide; sulfenamide vulcanization accelerators such as N-cyclohexyl-2-benzothiazylsulfenamide and N-t-butyl-2-benzothiazylsulfenamide; guanidine vulcanization accelerators such as diphenylguanidine; thiuram vulcanization accelerators such as tetramethylthiuram disulfide, tetraethylthiuram disulfide, tetrabutylthiuram disulfide, tetradodecylthiuram disulfide, tetraoctylthiuram disulfide, tetrabenzylthiuram disulfide, and dipentamethylenethiuram tetrasulfide; dithiocarbamate vulcanization accelerators such as zinc dimethyldithiocarbamate; and zinc dialkyldithiophosphate.

The crosslinking accelerator may use one or a combination of two or more of sulfenamide, thiuram, thiazole, guanidine, and dithiocarbamate. In order to, for example, adjust the crosslinking behavior (rate), a combination of thiuram and/or thiazole crosslinking accelerator having relatively high crosslinking accelerating ability with guanidine and/or sulfenamide crosslinking accelerator having relatively intermediate or low crosslinking accelerating ability may be suitably adopted. Specific examples include a combination of tetramethylthiuram disulfide and N-cyclohexyl-2-benzothiazylsulfenamide; a combination of tetrabutylthiuram disulfide and N-t-butyl-2-benzothiazylsulfenamide; and a combination of dibenzothiazyl disulfide and diphenylguanidine.

Examples of the crosslinking accelerating aid include zinc oxide (ZnO) and fatty acids. The fatty acid may be saturated or unsaturated, linear or branched. The carbon number of the fatty acid is not particularly limited. For example, the fatty acid may have 1 to 30 carbon atoms and preferably has 15 to 30 carbon atoms. Specific examples include naphthenic acids such as cyclohexane acid (cyclohexanecarboxylic acid), and alkylcyclopentane having a side chain; saturated fatty acids such as hexanoic acid, octanoic acid, decanoic acid (including branched carboxylic acids such as neodecanoic acid), dodecanoic acid, tetradecanoic acid, hexadecanoic acid, and octadecanoic acid (stearic acid); unsaturated fatty acids such as methacrylic acid, oleic acid, linoleic acid, and linolenic acid; and resin acids such as rosin, tall oil acid, and abietic acid. These crosslinking accelerating aids may be used alone or in a combination of two or more. The present disclosure may suitably use zinc oxide and stearic acid.

The age resistor is not particularly limited, and any known age resistor may be used. Examples thereof include a phenol age resistor, an imidazole age resistor, and an amine age resistor. These age resistors may be used alone or in a combination of two or more.

In obtaining the presently disclosed rubber composition for anti-vibration rubber, there is no specific limitation imposed on a method of compounding the above-described components, and all the component materials may be compounded at once to be kneaded, or may be compounded in two stages or three stages to be kneaded. For the kneading, known kneaders such as a roll kneader, an internal mixer, and a Banbury rotor may be used. In the case of molding the rubber composition into a sheet-like shape or a belt shape, known molders such as an extruder and a press machine may be used.

### <Anti-vibration rubber for vehicle>

The presently disclosed anti-vibration rubber for vehicle uses a crosslinked rubber composition for anti-vibration rubber obtained by crosslinking the presently disclosed rubber composition for anti-vibration rubber described above.

For the presently disclosed anti-vibration rubber for vehicle, the static spring constant (Ks) of the crosslinked rubber composition for anti-vibration rubber is 40 N/mm or less.

By using the crosslinked rubber composition for anti-vibration rubber, which is obtained by crosslinking the presently disclosed rubber composition for anti-vibration rubber, and keeping the Ks of the crosslinked rubber composition for anti-vibration rubber at 40 N/mm or less, it is possible to realize excellent vibration damping performance and excellent vehicle steering stability.

From the viewpoint of realizing better high-loss properties, the static spring constant (Ks) of the crosslinked rubber composition for anti-vibration rubber is preferably 35 N/mm or less and more preferably 30 N/mm or less.

In addition, from the viewpoint of maintaining the strength of the crosslinked rubber composition for anti-vibration rubber, the lower limit of the Ks is preferably about 5 N/mm.

The Ks of the crosslinked rubber composition for anti-vibration rubber can be measured according to JIS K 6385 (2012).

As for the loss of the crosslinked rubber composition for anti-vibration rubber, the tanδ at 15 Hz at room temperature (23 ± 2 °C) is preferably 0.15 or more, more preferably 0.18 or more, and particularly preferably 0.2 or more. In this way, it is possible to realize better vibration damping performance.

The crosslinking (vulcanization) conditions for curing the rubber composition for anti-vibration rubber are not particularly limited. For example, a vulcanization treatment may be performed at 140 °C to 180 °C for 5 minutes to 120 minutes.

The anti-vibration rubber for vehicle is a crosslinked rubber product that uses internal friction to prevent the transmission of vibrations of vehicle (for example, construction equipment such as automobiles, trucks, buses, trains, and excavators) and absorb shock. Specifically, it is a product used in a state where the above-described crosslinked rubber composition for anti-vibration rubber and a rigid body such as resin or metal are in contact with each other or integrated.

Examples of the method of integrating the crosslinked rubber composition for anti-vibration rubber and the rigid body include a non-adhesive method such as pressing the rubber into the rigid body, and a method of adhering the rubber to the rigid body via adhesive. It may also be an anti-vibration rubber containing fluid that encloses fluid inside and also possesses vibration transmission prevention function provided by the fluid.

The presently disclosed anti-vibration rubber for vehicle is preferably an anti-vibration rubber for automobile, and more preferably an anti-vibration rubber for upper mount, engine mount or bush, bumper stopper, or damper in automobiles. In this way, the high-loss properties provided by the crosslinked rubber composition for anti-vibration rubber can lead to excellent vibration damping performance.

### EXAMPLES

This disclosure is described in more detail below with reference to Examples, by which this disclosure is not intended to be limited in any way.

### (Examples 1 to 10, and Comparative Examples 1 to 7)

Rubber compositions for anti-vibration rubber to be used as samples were prepared according to the component composition listed in Table 1.

The rubber composition for anti-vibration rubber of each sample was heated at 155 °C for 30 minutes to 90 minutes to be vulcanized, to prepare samples of crosslinked rubber composition for anti-vibration rubber.

### (Evaluation)

Each samples of the crosslinked rubber composition for anti-vibration rubber was evaluated in terms of (1) hardness, (2) static spring constant, (3) loss, and (4) dynamic-to-static modulus ratio.

### (1) Hardness (Hd)

The hardness of each sample of the vulcanized rubber composition for anti-vibration rubber was measured according to JIS K 6253 (type A). The measurement results are listed in Table 1.

For the measured hardness, a larger numerical value indicates higher hardness.

### (2) Static spring constant (Ks)

The static spring constant (N/mm) of each sample of the vulcanized rubber composition for anti-vibration rubber was measured according to JIS K 6385 (2012). The measurement results are listed in Table 1.

For the measured static spring constant, a larger numerical value indicates a larger static spring constant.

### (3) Loss (tanδ)

The tanδ at 15 Hz and 23 °C ± 2 °C of each sample of the vulcanized rubber composition for anti-vibration rubber was measured according to JIS K 6394 (2007). The measurement results are listed in Table 1.

For the measured tanδ, a larger numerical value indicates a higher loss.

### (4) Dynamic-to-static modulus ratio (Kd100/Ks)

The dynamic-to-static modulus ratio at 100 Hz (Kd) of each sample of the vulcanized rubber composition for anti-vibration rubber was measured according to JIS K 6385 (2012). The measurement results are listed in Table 1.

For the measured dynamic-to-static modulus ratio, a larger numerical value indicates a larger dynamic-to-static modulus ratio.

### (5) Ratio of tanδ to dynamic-to-static modulus ratio (tanδ/dynamic-to-static modulus ratio)

For each sample of the vulcanized rubber composition for anti-vibration rubber, the ratio of the measured value of tanδ obtained in Evaluation (3) to the measured value of dynamic-to-static modulus ratio obtained in Evaluation (4) (tanδ/dynamic-to-static modulus ratio) was calculated. The calculation results are listed in Table 1.

For the calculated value of tanδ/dynamic-to-static modulus ratio, a larger numerical value indicates that the dynamic-to-static modulus ratio can be lowered without deteriorating the loss properties.

**Table 1**

| | | Example | | | | | | | | | | Comparative Example | | | | | | |
|---|---|---|---|---|---|---|---|---|---|---|---|---|---|---|---|---|---|---|
| | | 1 | 2 | 3 | 4 | 5 | 6 | 7 | 8 | 9 | 10 | 1 | 2 | 3 | 4 | 5 | 6 | 7 |
| Component composition (ratio to 100 parts by mass of rubber component) | Natural rubber | 20 | 20 | 20 | 20 | 10 | 0 | 70 | 20 | 20 | 20 | 20 | 20 | 50 | 20 | 20 | 100 | 100 |
| | Butadiene rubber | 80 | 80 | 80 | 80 | 90 | 100 | 30 | 80 | 80 | 80 | 80 | 80 | 50 | 80 | 80 | - | - |
| | Carbon black A ^{*1} | 2 | 10 | 2 | 2 | 2 | 2 | 2 | 1 | - | - | 2 | 2 | - | 10 | 10 | - | 51 |
| | Carbon black B ^{*2} | - | - | - | - | - | - | - | - | 2 | - | - | - | 25 | - | - | - | - |
| | Carbon black C ^{*3} | - | - | - | - | - | - | - | - | - | 2 | - | - | - | - | - | 26 | - |
| | Oil ^{*4} | 50 | 50 | 60 | 70 | 60 | 60 | 60 | 60 | 60 | 60 | 30 | 80 | 5 | 5 | 40 | 3 | 2 |
| | Sulfur | 0.5 | 2.2 | 0.5 | 0.5 | 0.5 | 0.5 | 0.5 | 0.5 | 0.5 | 0.5 | 0.5 | 0.5 | 2.2 | 2.2 | 2.2 | 2.2 | 1.6 |
| Evaluation | Hardness (Hd) | 11 | 21 | 8 | 7 | 10 | 12 | 5 | 7 | 8 | 9 | 31 | Impossible to measure * | 52 | 45 | 32 | 54 | 52 |
| | Static spring constant (Ks) | 13.1 | 25.6 | 9.8 | 8.9 | 20.1 | 13.1 | 7.2 | 9.5 | 10.1 | 10.9 | 40.5 | | 107 | 73.5 | 42.2 | 121 | 98.4 |
| | Loss (tanδ) | 0.175 | 0.083 | 0.204 | 0.207 | 0.186 | 0.188 | 0.181 | 0.2 | 0.206 | 0.209 | 0.104 | | 0.053 | 0.051 | 0.102 | 0.048 | 0.054 |
| | Dynamic-to-static modulus ratio (Kd100/Ks) | 2.29 | 1.4 | 2.82 | 2.73 | 2.36 | 2.22 | 2.67 | 2.75 | 2.83 | 2.84 | 2.11 | | 1.34 | 1.31 | 2.05 | 1.28 | 1.326 |
| | tanδ/dynamic-to-static modulus ratio | 0.076 | 0.059 | 0.072 | 0.076 | 0.079 | 0.085 | 0.068 | 0.072 | 0.072 | 0.074 | 0.049 | | 0.04 | 0.039 | 0.05 | 0.038 | 0.041 |

| | | | | | | | | | | | | | | | | | | |
|---|---|---|---|---|---|---|---|---|---|---|---|---|---|---|---|---|---|---|
| * The processability of the rubber composition deteriorated (turned into a slime-like shape). As a result, the rubber composition could not be molded into a sheet-like shape and the physical properties could not be measured. *1: FT grade carbon black, "Asahi Thermal" made by Asahi Carbon Co., Ltd. *2: SRF grade carbon black, "Asahi #50" made by Asahi Carbon Co., Ltd. 3: FEF grade carbon black, "Asahi #65" made by Asahi Carbon Co., Ltd. 4: "SUNTHENE4240" made by SUN REFINING AND MARKETING COMPANY | | | | | | | | | | | | | | | | | | |

According to the results of Table 1, it is understood that each sample of Examples was superior in the balance between high loss and low dynamic-to-static modulus ratio as compared with each sample of Comparative Examples.

### INDUSTRIAL APPLICABILITY

According to the present disclosure, it is possible to provide a rubber composition for anti-vibration rubber having excellent high-loss properties while maintaining a favorably low dynamic-to-static modulus ratio, and an anti-vibration rubber for vehicle that is excellent in vibration damping performance and can improve the steering stability of a vehicle mounted with the anti-vibration rubber.

## Claims

1. A rubber composition for anti-vibration rubber, comprising
a rubber component containing a diene rubber,
more than 0 parts by mass and 10 parts by mass or less of carbon black with respect to 100 parts by mass of the rubber component, and
50 parts by mass to 70 parts by mass of oil with respect to 100 parts by mass of the rubber component.

2. The rubber composition for anti-vibration rubber according to claim 1, wherein the rubber component contains at least a natural rubber and a butadiene rubber as the diene rubber, and a mass ratio of the natural rubber to the butadiene rubber, expressed as NR: BR, is in a range of 60:40 to 10:90.

3. The rubber composition for anti-vibration rubber according to claim 1 or 2, wherein the carbon black is contained in an amount of 2 parts by mass or less with respect to 100 parts by mass of the rubber component.

4. The rubber composition for anti-vibration rubber according to any one of claims 1 to 3, wherein the rubber composition for anti-vibration rubber further contains a crosslinking agent, and the crosslinking agent is contained in an amount of more than 0 parts by mass and 3.5 parts by mass or less with respect to 100 parts by mass of the rubber component.

5. An anti-vibration rubber for vehicle using a crosslinked rubber composition for anti-vibration rubber obtained by crosslinking the rubber composition for anti-vibration rubber according to any one of claims 1 to 4, wherein the crosslinked rubber composition for anti-vibration rubber has a static spring constant (Ks) of 40 N/mm or less.
